# EUROPÄISCHE PATENTANMELDUNG

(11) **EP 0 936 471 A2**
(43) Veröffentlichungstag der Anmeldung: **18.08.1999**
(21) Anmeldenummer: 99101273.3
(22) Anmeldetag: 23.01.1999
(51) Int. Cl.: G01S 13/93

(54) **Fahrzeug mit Objekterfassungseinrichtung**

(30) Priorität: 14.02.1998 DE 19806150
(71) Anmelder: DaimlerChrysler AG, 70567 Stuttgart (DE)
(72) Erfinder: Betzitza, Peter, 71069 Sindelfingen (DE); Dobler, Günter, 73776 Altbach (DE); Rothe, Siegfried, 73770 Denkendorf (DE)

(57) **Zusammenfassung**

Die Erfindung bezieht sich auf ein Fahrzeug mit einer Objekterfassungseinrichtung zur Erfassung von Objekten in einem seitlich rückwärtigen Beobachtungsbereich, die Mittel zur berührungslosen, strahlungsbasierten Abtastung des Beobachtungsbereichs und eine den Abtastmitteln nachgeschaltete Auswerteeinheit beinhaltet.

Erfindungsgemäß wertet die Auswerteeinheit die Abtastinformationen von zwei oder mehr streifenförmigen Teilbereichen des Beobachtungsbereichs mit zur Fahrzeuglängsrichtung unterschiedlich geneigten oder in Fahrzeuglängsrichtung gegeneinander versetzen Horizontalkomponenten zeitaufgelöst aus und unterscheidet anhand der Ansprechreihenfolge der Beobachtungsteilbereiche sich in Fahrtrichtung des Fahrzeug bewegende Objekte von stehenden und entgegenkommenden Objekten.

Verwendung z.B. für Automobile.

## Beschreibung

Die Erfindung bezieht sich auf ein Fahrzeug mit einer Einrichtung zur Erfassung von Objekten in einem Beobachtungsbereich vorgegebener Horizontalerstreckung, wobei die Objekterfassungseinrichtung Mittel zur strahlungsbasierten Abtastung des Beobachtungsbereichs und eine diesen nachgeschaltete Auswerteeinheit aufweist.

Fahrzeuge dieser Art sind verschiedentlich bekannt, wobei die Objekterfassungseinrichtung zur Erkennung anderer Fahrzeuge im sogenannten Totwinkelbereich, d.h. in dem vom Fahrer schlecht einsehbaren Bereich seitlich hinter dem Fahrzeug, insbesondere dem linken rückwärtigen Seitenbereich, zur Erkennung des Verlaufs von Fahrbahnmarkierungen, zur Erkennung stehender Objekte, insbesondere auch von Fahrzeugen, zur Erkennung von Parklücken zwischen stehenden Objekten und zur Bestimmung von deren Größe oder für einen anderen, ähnlichen Zweck dienen kann. Als Mittel zur berührungslosen, strahlungsbasierten Abtastung des Beobachtungsbereichs kommen insbesondere optische Systeme, wie Infrarot-Abtastsysteme oder Videokameras, sowie akustische Systeme, wie Ultraschall- und Radar-Systeme, zum Einsatz. Objekterfassungseinrichtungen als Hilfsmittel zum Einparken sind z.B. in der Offenlegungsschrift DE 37 28 948 A1 und der Patentschrift DE 38 13 083 C3 beschrieben, während die Patentschrift DE 195 07 957 C1 ein Fahrzeug mit seitlich angebrachter optischer Abtasteinrichtung in Form eines Infrarot-Abtastsystems offenbart, das der Erfassung von Fahrspurbegrenzungen dient, wobei optional weitere optische Abtasteinrichtungen an den übrigen Fahrzeugseiten vorhanden sein können, um eine beidseitige oder allseitige Umfeldüberwachung zur Erfassung von dort eventuell befindlichen Objekten bereitzustellen.

Der Erfindung liegt als technisches Problem die Bereitstellung eines Fahrzeugs der eingangs genannten Art Zugrunde, bei dem mit relativ geringem Aufwand der Beobachtungsbereich zuverlässig hinsichtlich auftretender Objekte überwacht und erkannte Objekte zusätzlich hinsichtlich ihrer Bewegungsrichtung relativ zur Fahrzeugbewegungsrichtung unterschieden werden können, und bei dem die verwendete Objekterfassungseinrichtung bei Bedarf flexibel für weitere Anwendungszwecke einsetzbar ist.

Die Erfindung löst dieses Problem durch die Bereitstellung eines Fahrzeugs mit den Merkmalen des Anspruchs 1. Bei diesem Fahrzeug wertet die Auswerteeinheit der Objekterfassungseinrichtung die Abtastinformationen von zwei oder mehr streifenförmigen Teilbereichen des Beobachtungsbereichs mit zur Fahrzeuglängsrichtung unterschiedlich geneigten oder in Fahrzeuglängsrichtung versetzten Horizontalkomponenten zeitaufgelöst aus und unterscheidet bei einem auftretenden Objekt anhand der Ansprechreihenfolge der Beobachtungsteilbereiche sich in Fahrtrichtung des Fahrzeugs bewegende Objekte von stehenden und entgegenkommenden Objekten. Als Abtastmittel können in der Objekterfassungseinrichtung alle gängigen, auf elektromagnetischer Strahlung oder akustischen Wellen basierenden Abtastsysteme verwendet werden, insbesondere Infrarot-, Radar- und Ultraschallsysteme mit einzelnen richtungsspezifischen Abtastelementen, die einen jeweiligen Beobachtungsteilbereich abdecken, aber auch Videokamerasysteme, bei denen dann die streifenförmigen Beobachtungsteilbereiche korrespondierenden Bildausschnitten des vom Beobachtungsbereich aufgenommen Videobildes entsprechen.

Auf diese Weise ist mit relativ geringem Aufwand eine zuverlässige Erfassung von im Beobachtungsbereich auftretenden Objekten und eine zusätzliche Unterscheidung zwischen stehenden und entgegenkommenden Objekten einerseits von sich in Fahrtrichtung des Fahrzeugs bewegenden Objekten andererseits möglich. Insbesondere können in den Beobachtungsbereich eintretende, überholende Fahrzeuge von parkenden Fahrzeugen an einem Fahrbahnrand, von stationären Objekten außerhalb der Fahrbahn und von entgegenkommenden Fahrzeugen unterschieden werden. Die separate, zeitaufgelöste Auswertung verschiedener Teilbereiche des Beobachtungsbereichs schafft zudem die Voraussetzung für eine flexible Verwendbarkeit der Objekterfassungseinrichtung für weitere Zwecke, wie Parklückenerkennung und spezielle Erkennung von aus dem Windschatten auf eine Überholspur wechselnden Fahrzeugen.

Bei einem nach Anspruch 2 weitergebildeten Fahrzeug ist die Objekterfassungseinrichtung so ausgelegt, daß sie sich in vorteilhafter Weise zur Erkennung und Vermessung von Parklücken verwenden läßt. Dazu wird sie, wenn die Fahrzeuggeschwindigkeit unter einem vorgebbaren Schwellwert liegt, automatisch mit dem Setzen eines entsprechenden Blinkersignals in einen zugehörigen Parklückenerkennungsmodus geschaltet, in welchem speziell die Abtastung eines Beobachtungsteilbereichs mit im wesentlichen parallel zur Fahrzeugquerrichtung verlaufender Horizontalkomponente aktiv ist. Im übrigen bleibt die Abtastung des Beobachtungsbereichs in diesem Betriebsmodus vorzugsweise inaktiv, was den Energieverbrauch und den Datenverarbeitungsaufwand gering hält. Die Abtastinformationen aus diesem in einer Horizontalebene im wesentlichen senkrecht zur Fahrtrichtung verlaufenden Abtaststreifen eignen sich zur Erkennung von Parklücken zwischen stehenden Fahrzeugen, an denen das Fahrzeug vorbeifährt und zur Bestimmung der Größe solcher Parklücken, wozu die Auswerteeinheit diese Abtastinformationen entsprechend auswertet.

Bei einem nach Anspruch 3 weitergebildeten Fahrzeug ist die Objekterfassungseinrichtung so ausgelegt, daß in den Beobachtungsbereich eintretende, überholende Fahrzeuge danach unterschieden werden können, ob sie sich bereits seit längerem auf der Überholspur befinden oder ob sie erst kurz hinter dem Fahrzeug, insbesondere aus dessen Windschatten heraus, auf die Überholspur wechseln. Die letztgenannte Situation stellt ein erhöhtes Gefahrenpotential dar, das mit dieser Weiterbildung der Erfindung spezifisch erkannt werden kann. Zu diesem Zweck besitzen die Beobachtungsteilbereiche eine begrenzte Reichweite zwischen etwa 3m und 20m, vorzugsweise ungefähr 5m, und verlaufen mit fächerförmig vom Fahrzeug abgehenden Horizontalkomponenten derart, daß sich mindestens ein streifenförmiger Teilbereich mit überwiegender Rückwärtskomponente um weniger als die Fahrzeugbreite seitlich über das Fahrzeug hinaus erstreckt.

Mit dieser Weiterbildung läßt sich eine zuverlässige Erkennung derjenigen erhöhten Gefahrensituation realisieren, bei welcher ein nachfolgendes Fahrzeug erst kurz hinter dem eigenen Fahrzeug aus dessen Windschatten herausfährt. In diesem Fall spricht zuerst die zu dem primär nach rückwärts gewandten Teilbereich gehörige Abtastung an, bevor dann die zu den sich weiter seitlich erstreckenden Teilbereichen gehörigen Abtastungen der fächerförmigen Teilbereichanordnung sukzessive ansprechen. Im Unterschied dazu spricht dieser hauptsächlich nach rückwärts gewandte Teilbereich auf ein schon von weiter hinten sich auf der Überholspur näherndes Fahrzeug nicht an, da er sich nur geringfügig seitlich über das eigene Fahrzeug hinaus und nicht wesentlich in den Bereich der Überholspur hinein erstreckt, so daß sich diese beiden Überholsituationen sicher unterscheiden lassen.

Vorteilhafte Ausführungsbeispiele der Erfindung sind in den Zeichnungen dargestellt und werden nachfolgend beschrieben. Hierbei zeigen:
- Fig. 1: eine schematische Draufsicht auf eine Fahrbahn mit einem Fahrzeug mit Objekterfassungseinrichtung,
- Fig. 2: eine zur Fig. 1 analoge Ansicht zur Veranschaulichung der Unterscheidung von überholenden und entgegenkommenden Fahrzeugen durch die Objekterfassungseinrichtung,
- Fig. 3: eine zur Fig. 1 analoge Ansicht zur Veranschaulichung eines Parklückenerkennungsmodus der Objekterfassungseinrichtung und
- Fig. 4: eine zur Fig. 1 analoge Ansicht zur Veranschaulichung der Erkennung eines aus dem Windschatten herausfahrenden Fahrzeugs durch die Objekterfassungseinrichtung.

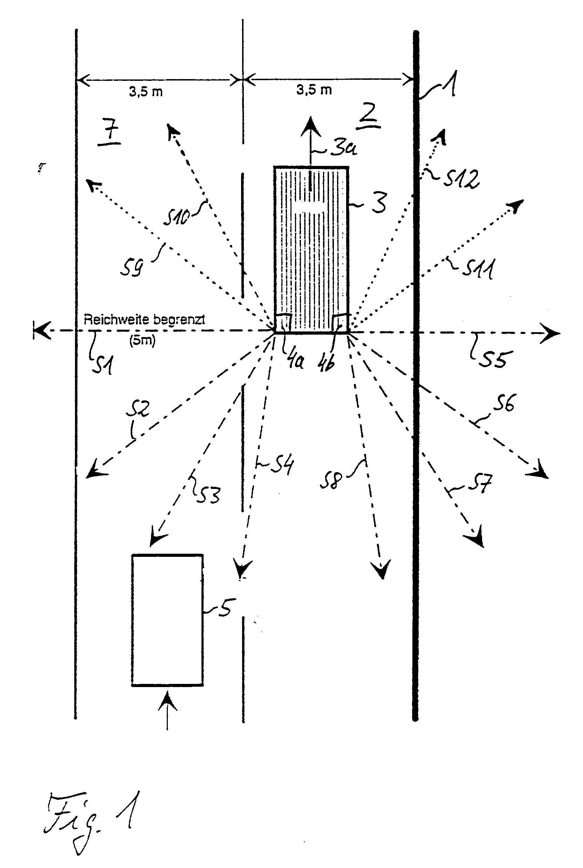

Fig. 1 zeigt einen Ausschnitt einer zweispurigen Straße 1, auf deren rechter Fahrspur 2 sich ein schematisch und schraffiert dargestelltes Kraftfahrzeug 3, z.B. ein Personenkraftwagen, mit einer Objekterfassungseinrichtung befindet. Die Objekterfassungseinrichtung beinhaltet Abtastmittel in Form einer jeweiligen Sender-/Empfängereinheit 4a, 4b im linken und im rechten Fahrzeugheckbereich, die z.B. in eine dort positionierte Rückleuchte integriert sein kann. Die Sender-/Empfängereinheiten 4a, 4b arbeiten mit Infrarotstrahlung, wobei jede dieser beiden Einheiten 4a, 4b fächerförmig und im wesentlichen horizontal vier Infrarot-Meßstrahlen S1, S2, S3, S4 bzw. S5, S6, S7, S8 mit einer vorgegebenen Reichweite von ca. 5m in den jeweils zugehörigen seitlich rückwärtigen Bereich abstrahlt. Dabei liegt der jeweils am weitesten seitlich abgestrahlte Meßstrahl S1, S5 etwa parallel zur Fahrzeugquerrichtung, während der am weitesten rückwärtig abgestrahlte Meßstrahl S4, S8 nur einen kleinen Winkel von etwa 10° zur Fahrzeuglängsrichtung, d.h. zur Fahrtrichtung 3a, einschließt und sich dadurch seitlich nur um etwa die halbe Fahrzeugbreite über das Fahrzeug 3 hinaus erstreckt. Die beiden übrigen jeweiligen Meßstrahlen S2, S3 bzw. S6, S7 liegen mit konstanten Winkelabständen zwischen diesen beiden äußeren Meßstrahlen S1, S4 bzw. S5, S8, so daß der von der jeweiligen Sender-/Empfängereinheit berührungslos mittels Infrarotstrahlung abgetastete Beobachtungsbereich von dem durch die beiden äußeren Meßstrahlen S1, S4 bzw. S5, S8 begrenzten Sektor gebildet ist.

In Fig. 1 sind des weiteren punktiert je zwei weitere Meßstrahlen S9, S10 bzw. S11, S12 jeder Sende-/Empfängereinheit 4a, 4b angedeutet, die optional vorgesehen sein können und den Beobachtungsbereich um einen seitlich vorwärtsweisenden Bereich erweitern. Die Abstrahlung solcher zusätzlicher Meßstrahlen S9 bis S12 mit einer vorwärtsgerichteten Komponente erweist sich besonders zur rechtzeitigen Erkennung von Verkehrsschildern und ähnlichen stehenden Objekten am Straßenrand als vorteilhaft. Denn solche Verkehrsschilder sind in der Regel mit zur Fahrbahnlängsrichtung ungefähr senkrechter Schilderfläche aufgestellt und bieten daher den seitlichen Meßstrahlkomponenten wenig Reflexionsfläche. Während somit die seitlichen Meßstrahlkomponenten nur ein schwaches Erkennungssignal für solche Verkehrsschilder bieten, lassen sich die Schilder durch die auf deren breite Frontfläche auftreffenden Vorwärtskomponenten der optionalen Meßstrahlen S9 bis S12 mit verbesserter Erkennungssicherheit detektieren. Die Reichweite dieser seitlich vorwärts abgestrahlten Meßstrahlen S9 bis S12 ist zu diesem Zweck so gewählt, daß letztere noch etwas über den Rand der vom Fahrzeug 3 befahrenen Fahrspur 2 hinausragen, siehe die beiden Meßstrahlen S11 und S12 in Fig. 1. Im übrigen tragen diese optionalen Meßstrahlen S9 bis S12, die z.B. als Infrarot- oder Radarstrahlen realisiert sein können, in analoger Weise wie die anderen Meßstrahlen S1 bis S8 zur Funktion der Objekterfassungseinrichtung bei, wie sie unten eingehend erläutert wird.

Es versteht sich, daß alternativ zu diesem gezeigten Beispiel weitere Meßstrahlen und/oder weitere Sender-/Empfängereinheiten an anderen Fahrzeugstellen vorgesehen sein können und daß alternativ zur Verwendung von Infrarotsystemen Systeme eingesetzt werden können, die mit einer anderen elektromagnetischen Strahlung oder mit akustischen Wellen arbeiten, wie optische Systeme, die mit sichtbarem Licht arbeiten, einschließlich Videokamerasysteme, Funkwellensysteme, Ultraschallsysteme, Radarsysteme oder Kombinationen solcher Systeme, z.B. kombinierte Radar- und Infrarotsysteme. Wichtig ist jeweils, daß die Systeme so ausgelegt sind, daß die Abtastinformationen mehrerer Teilbereiche des überwachten Beobachtungsbereichs, vorliegend die Abtastinformationen der einzelnen Meßstrahlen S1 bis S8, getrennt erfaßt werden. Bei einem Videokamerasystem kann dies durch Auswahl entsprechender streifenförmiger Bildausschnitte erfolgen, beim vorliegenden Infrarotsystem sowie bei Ultraschall- und Radarsystemen sind die Teilbereiche vorzugsweise durch je einen eigenen Meßstrahl realisiert, wobei je nach Anwendungsfall eine beliebige Anzahl von Meßstrahlen bzw. Beobachtungsteilbereichen vorgesehen sein kann. In einer weiteren alternativen Systemauslegung können anstelle der gezeigten, relativ gut kollimierten, weitgehend horizontal verlaufenden Infrarotmeßstrahlen Strahlenbündel mit kegelförmiger oder flächiger, vorhangartiger, mit einer Vertikalkomponente verlaufender Charakteristik verwendet werden, wobei jeweils nur wichtig ist, daß die Horizontalkomponenten der so gebildeten Teilbereiche des abgetasteten Beobachtungsbereichs in Fahrzeugfahrtrichtung gegeneinander versetzt oder bezüglich dieser Richtung unterschiedlich geneigt sind. Des weiteren kann die Reichweite des jeweils verwendeten Abtastsystems beliebig gewählt werden, wobei für die vorliegend primär betrachteten Einsatzzwecke eine relativ kurze Reichweite zwischen etwa 3m und etwa 20m von Vorteil ist.

Den Abtastmitteln 4a, 4b ist in herkömmlicher, nicht gezeigter Weise eine geeignete Auswerteeinheit zugeordnet, welche die Ausgangssignale der Abtastmittel 4a, 4b empfängt. Die in diesen Ausgangssignalen enthaltenen Abtastinformationen von den einzelnen Meßstrahlen S1 bis S8 werden von der Auswerteeinheit separat und zeitaufgelöst ausgewertet, wozu letztere in herkömmlicher Weise geeignet ausgelegt ist, was hier keiner weiteren Erläuterung bedarf. Die Objekterfassung erfolgt dabei mit Hilfe herkömmlicher Methoden, wie Reflexions- und/oder Laufzeitmessung und/oder Triangulation und/oder Videobildauswertung. Über die Auswerteeinheit erkennt somit die Objekterfassungseinrichtung, wenn sich ein Objekt im jeweiligen Beobachtungsbereich befindet bzw. in diesen eintritt. So illustriert Fig. 1 den Fall einer Totwinkelüberwachung, indem bei aktiv geschalteter Sender-/Empfängereinheit 4a im hinteren linken Fahrzeugeckbereich ein auf einer Überholspur 7 herannahendes Fahrzeug 5 erkannt wird, sobald es in den zugehörigen Beobachtungsbereich, der den für den Fahrer schlecht einsehbaren Totwinkelbereich bildet, eintritt. Charakteristischerweise ist die Auswerteeinheit zusätzlich so ausgelegt, daß sie die aus der zeitaufgelösten Auswertung der Abtastinformationen erhaltene Ansprechreihenfolge der einzelnen Meßstrahlen S1 bis S4 bzw. S5 bis S8 im Falle eines auftretenden Objektes ermittelt und daraus nicht nur das Vorhandensein desselben erkennt und meldet, sondern weitere Folgerungen zieht, wie nachstehend beschrieben.

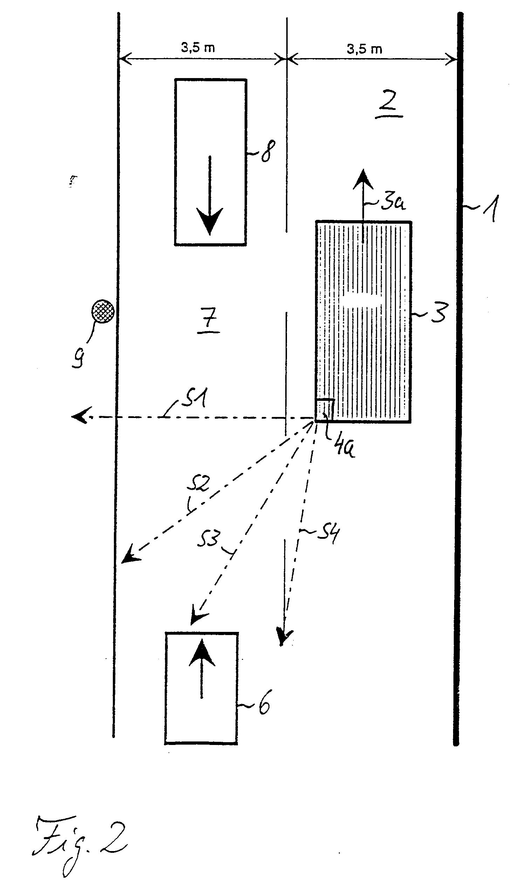

So veranschaulicht Fig. 2 die Fähigkeit der Objekterfassungseinrichtung, überholende Fahrzeuge von stehenden Objekten bzw. Fahrzeugen und von entgegenkommenden Fahrzeugen unterscheiden zu können. Wie aus Fig. 2 ersichtlich, sprechen im Fall, daß ein sich von hinten dem eigenen, auf der rechten Fahrspur 2 fahrenden Fahrzeug 3 ein überholendes Fahrzeug 6 auf der Überholspur 7 nähert und in den Totwinkel-Beobachtungsbereich eintritt, die Meßstrahlen S1 bis S4 der betreffenden Sender-/Empfängereinheit 4a in einer Ansprechreihenfolge derart nacheinander an, daß zunächst der am weitesten rückwärtig in die Überholspur 7 hineinreichende Meßstrahl S3 und dann nacheinander die seitlicher abgestrahlten Meßstrahlen S2 und S1 ansprechen. Der am weitesten rückwärtig abgestrahlte Meßstrahl S4 spricht in diesem Fall nicht an, da er nicht weit genug in die Überholspur 7 hineinreicht.

Im Gegensatz zu dieser Ansprechreihenfolge S3-S2-S1 ergibt sich für den Fall eines auf der linken Fahrspur 7 entgegenkommenden Fahrzeugs 8, wie ebenfalls in Fig. 2 eingezeichnet, eine umgekehrte Ansprechreihenfolge S1-S2-S3, d.h. es sprechen zuerst der am weitesten seitlich abgestrahlte Meßstrahl S1 und dann sukzessive die zunehmend nach rückwärts abgestrahlten Meßstrahlen S2 und S3 an. Bei Verwendung der optionalen, mit Vorwärtskomponente seitlich abgestrahlten Meßstrahlen S9 bis S12, die der Einfachheit halber nur in Fig. 1 dargestellt sind, wird ersichtlich eine noch frühzeitigere Erkennung des entgegenkommenden Fahrzeugs 8 ermöglicht, wobei zunächst der am weitesten nach vorne gerichtete Meßstrahl S10, dann der schwächer nach vorne seitlich gerichtete Meßstrahl S9 und dann die Meßstrahlen S1 bis S3 in der genannten Reihenfolge ansprechen. Eine analoge Ansprechreihenfolge ergibt sich für den Fall von am Fahrbahnrand der linken Fahrspur 7 gegebenenfalls parkenden Fahrzeugen sowie für ein stehendes Objekt 9, das sich außerhalb der Straße 1 in der Nähe des Fahrbahnrandes befindet, z.B. ein Lichtmast, ein Verkehrsschild oder Leitplanke. Bei entsprechender Systemsauslegung können solche stehenden Objekte von auf der linken Fahrspur 7 befindlichen Fahrzeugen dadurch unterschieden werden, daß sie nicht mehr von den drei besagten Meßstrahlen S1, S2, S3, sondern höchstens noch von dem am weitesten seitlich abgestrahlten Meßstrahl S1 oder allenfalls noch zusätzlich von dem diesem benachbarten Meßstrahl S2 erfaßt werden. In gleicher Weise können Fahrzeuge auf einer eventuell vorhandenen dritten Fahrspur noch erkannt oder je nach Reichweitenwahl der Abtastmittel ausgeblendet werden.

Durch die von der Auswerteeinheit berücksichtigte Ansprechreihenfolge ist es somit möglich, stehende Objekte und entgegenkommende Fahrzeuge, die in den Beobachungsbereich gelangen können, von den interessierenden, überholenden Fahrzeugen zu unterscheiden und aus der weiteren Auswertung auszublenden. Dies kann dazu genutzt werden, nur bei Erkennung eines überholenden Fahrzeugs eine entsprechende Überholwarnmeldung zu erzeugen, ohne daß fälschlicherweise eine derartige Warnmeldung durch entgegenkommende Fahrzeuge, parkende Fahrzeuge oder stehende Objekte außerhalb der Straße erzeugt wird.

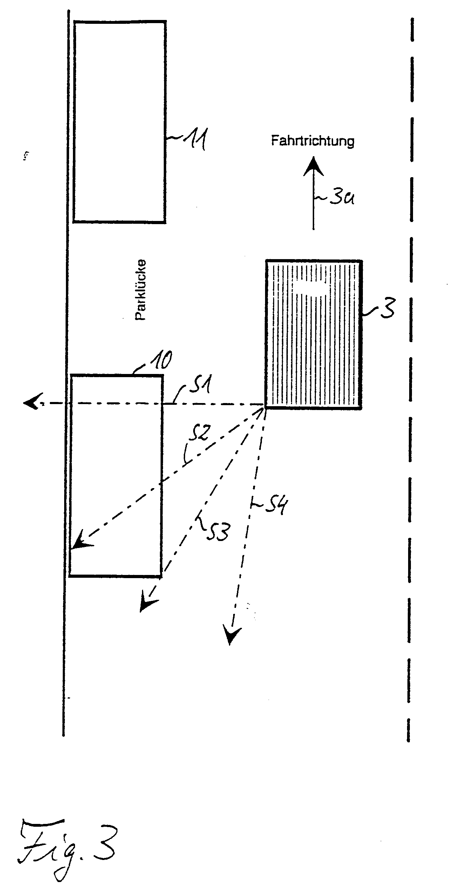

In Fig. 3 ist die Fähigkeit der Objekterfassungseinrichtung illustriert, Parklücken detektieren und deren Größe bestimmen zu können. Die Objekterfassungseinrichtung ist hierzu automatisch in einen Parklückenerkennungsmodus umschaltbar, der dann aktiviert ist, wenn die Fahrzeuggeschwindigkeit unterhalb eines vorgegebenen Schwellwertes liegt und ein Blinkersignal zur entsprechenden Fahrzeugseite hin gesetzt ist. Es wird dann spezifisch nur die auf dieser Seite liegende Sender-/Empfängereinheit 4a aktiviert, wobei zur weiteren Energieverbrauchs- und Datenreduzierung von dieser vorzugsweise nur der im wesentlichen seitlich abgestrahlte Meßstrahl S1 aktiviert wird und/oder von der Auswerteeinheit nur das zu diesem Meßstrahl S1 gehörige Ausgangssignal ausgewertet wird. Beim Vorbeifahren an zwei beabstandeten, parkenden Fahrzeugen 10, 11 mit dem eigenen Fahrzeug 3 erkennt auf diese Weise die Objekterfassungseinrichtung über den seitlich abgestrahlten Meßstrahl S1 das Vorhandensein einer zwischenliegenden Parklücke. Aus der Höhe der Fahrzeuggeschwindigkeit und der Dauer, bis der Meßstrahl S1 nach Verlassen des einen parkenden Fahrzeugs 10 auf das andere parkende Fahrzeug 11 trifft, ermittelt die Auswerteeinheit die Länge der Parklücke und kann danach entscheiden, ob diese zum Parken des eigenen Fahrzeugs 3 ausreicht. Es versteht sich, daß alternativ oder zusätzlich zur gezeigten automatischen Aktivierung dieses Parklückenerkennungsmodus auch vorgesehen sein kann, selbigen manuell aktivieren zu können.

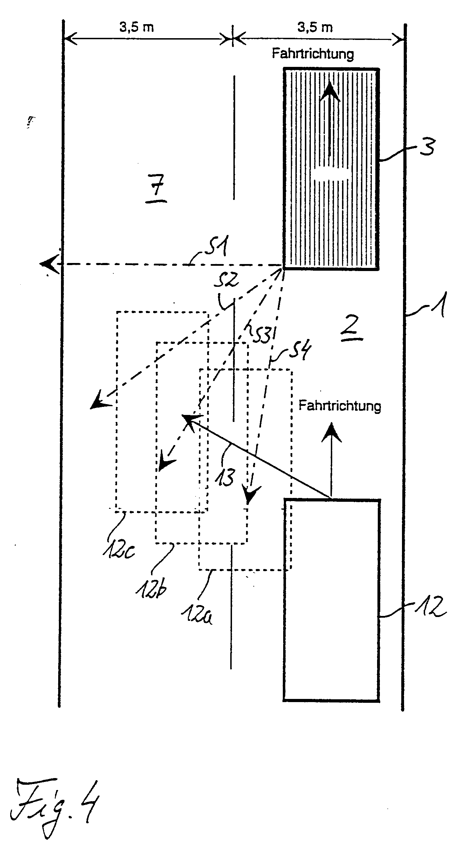

In Fig. 4 ist die weitere Fähigkeit der Objekterfassungseinrichtung veranschaulicht, das Herausfahren eines im Windschatten des eigenen Fahrzeugs 3 befindlichen Fahrzeugs 12 von der momentanen Spur 2 auf die Überholspur 7 erkennen und von dem Fall unterscheiden zu können, daß sich ein Fahrzeug dem eigenen Fahrzeug 3 schon länger vorher auf der Überholspur 7 nähert, wie dies beim überholenden Fahrzeug 6 von Fig. 2 der Fall ist. Wie aus Fig. 4 ersichtlich, spricht beim Herausfahren des dicht hinter dem eigenen Fahrzeug 3 in dessen Windschatten befindlichen Fahrzeugs 12 auf die Überholspur 7 nunmehr auch der am weitesten rückwärtig abgestrahlte Meßstrahl S4 an, und zwar vor den übrigen Meßstrahlen S1 bis S3. Mit sich zunehmend schräg nach vorn aus dem Windschatten des eigenen Fahrzeugs 3 herausbewegendem Überholfahrzeug 12, wie mit dem Bewegungspfeil 13 angedeutet, nimmt dieses sukzessive die gestrichelt gezeichneten Positionen 12a, 12b und 12c ein, um anschließend das eigene Fahrzeug 3 zu überholen. Dadurch ergibt sich für die vier Meßstrahlen S1 bis S4 die Ansprechreihenfolge S4-S3-S2-S1, die sich somit von den Ansprechreihenfolgen der anderen, oben erläuterten Verkehrssituationen unterscheidet. Insbesondere ist auf diese Weise der Fall eines aus dem Windschatten heraus überholenden Fahrzeugs gemäß Fig. 4 sicher von dem Fall eines sich bereits auf der Überholspur nähernden Fahrzeugs gemäß Fig. 2 unterscheidbar, indem nur im ersteren Fall der am weitesten rückwärts abgestrahlte Meßstrahl S4 entspricht. Dies läßt sich dazu nutzen, für den Fall, daß ein Überholen aus dem Windschatten heraus gemäß Fig. 4 durch die Objekterfassungseinrichtung erkannt wird, eine entsprechende Warnmeldung abzugeben, die sich von derjenigen des anderen Überholfalles unterscheidet, vorzugsweise durch einen erhöhten Warnungsgrad zwecks Signalisierung einer erhöhten Gefahr.

Aus der obigen Beschreibung vorteilhafter Beispiele wird deutlich, daß das erfindungsgemäße Fahrzeug über eine Objekterfassungseinrichtung verfügt, die mit relativ geringem Aufwand realisierbar ist und dabei eine Mehrzahl von Funktionen zu erfüllen vermag, wie spezifisches Erfassen eines überholenden, im toten Winkel befindlichen Fahrzeugs, Klassifizieren der Gefahrengröße bei detektierten Überholvorgängen und Abgabe von je nach Gefahrengröße unterschiedlichen Warnmeldungen, Ausblenden stehender Objekte, wie Leitplanken, Verkehrsschilder, Lichtmasten und parkende Fahrzeuge, Unterscheiden zwischen überholenden und entgegenkommenden Fahrzeugen, Erkennung und Größenbestimmung von Parklücken und Ausblenden von auf einer dritten oder weiteren Fahrspuren befindlichen Fahrzeugen.

## Patentansprüche

1. Fahrzeug mit
- einer Objekterfassungseinrichtung zur Erfassung von Objekten in einem Beobachtungsbereich vorgegebener Horizontalerstreckung mit Mitteln (4a) zur strahlungsbasierten Abtastung des Beobachtungsbereichs und einer den Abtastmitteln nachgeschalteten Auswerteeinheit,
**dadurch gekennzeichnet, daß**
- die Auswerteeinheit die Abtastinformationen von zwei oder mehr streifenförmigen Teilbereichen (S1 bis S4) des Beobachtungsbereichs mit zur Fahrzeuglängsrichtung unterschiedlich geneigten oder in Fahrzeuglängsrichtung gegeneinander versetzten Horizontalkomponenten zeitaufgelöst auswertet und anhand der Ansprechreihenfolge der Beobachtungsteilbereiche sich in Fahrtrichtung des Fahrzeugs bewegende Objekte (5) von stehenden und entgegenkommenden Objekten (8, 9) unterscheidet.

2. Fahrzeug nach Anspruch 1, weiter
**dadurch gekennzeichnet, daß**
die Objekterfassungseinrichtung selbsttätig in einen Parklückenerkennungsmodus geschaltet wird, wenn die Fahrzeuggeschwindigkeit unterhalb eines vorgebbaren Schwellwertes liegt und ein Blinkersignal gesetzt wird, wobei sie im Parklückenerkennungsmodus die Abtastung wenigstens eines im wesentlichen quer zur Fahrzeuglängsrichtung verlaufenden Beobachtungsteilbereichs aktiviert und dessen Abtastinformationen auf Vorhandensein und Abmessung einer Parklücke hin auswertet.

3. Fahrzeug nach Anspruch 1 oder 2, weiter
**dadurch gekennzeichnet, daß**
die Reichweite der Beobachtungsteilbereiche (S1 bis S4) zwischen etwa 3m und etwa 20m liegt und sich die Teilbereiche (S1 bis S4) mit fächerförmig vom Fahrzeug (3) abgehenden Horizontalkomponenten erstrecken, wobei sich die Horizontalkomponente wenigstens eines Teilbereichs (S4) seitlich höchstens um etwa die halbe Fahrzeugbreite über das Fahrzeug (3) hinaus erstreckt.
